(19) Europäisches Patentamt
European Patent Office
Office européen des brevets

(11) EP 1 873 577 A1

(12) **EUROPEAN PATENT APPLICATION**
published in accordance with Art. 153(4) EPC

(43) Date of publication:
**02.01.2008 Bulletin 2008/01**

(21) Application number: **06729948.7**

(22) Date of filing: **24.03.2006**

(51) Int Cl.:
***G02F 1/1335*** *(2006.01)* ***G02B 5/30*** *(2006.01)*

(86) International application number:
**PCT/JP2006/306000**

(87) International publication number:
**WO 2006/104052 (05.10.2006 Gazette 2006/40)**

(84) Designated Contracting States:
**DE**

(30) Priority: **29.03.2005 JP 2005094098**

(71) Applicant: **MITSUBISHI CHEMICAL CORPORATION**
**Tokyo 108-0014 (JP)**

(72) Inventors:
- **KADOWAKI, Masami,**
  **c/o Mitsubishi Chemical Group**
  **Yokohama-shi,**
  **Kanagawa 2278502 (JP)**
- **YONEYAMA, Tomio,**
  **c/o Mitsubishi Chemical Group**
  **Yokohama-shi,**
  **Kanagawa 2278502 (JP)**

(74) Representative: **HOFFMANN EITLE**
**Patent- und Rechtsanwälte**
**Arabellastrasse 4**
**81925 München (DE)**

(54) **In-Cell TYPE POLARIZER COMPOSITION, In-Cell TYPE POLARIZER, In-Cell TYPE LAYERED LIGHT POLARIZER, AND LIQUID CRYSTAL ELEMENT USING THE SAME**

(57) An in-cell polarizer is provided which can achieve a liquid crystal device having excellent drive and display characteristics in an active drive system. A composition for the in-cell polarizer comprises a dye and a solvent and has an electric conductivity of 25 mS/cm or less.

FIG. 5

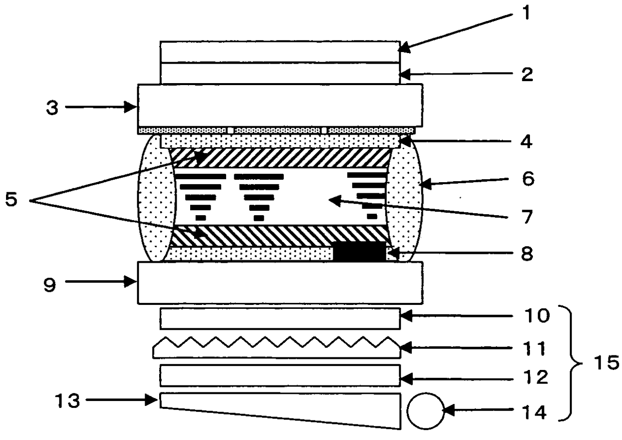


EP 1 873 577 A1

## Description

### Technical Field

The present invention relates to a composition for in-cell polarizers, the composition being useful for polarizers included in light modulation devices, liquid crystal devices (LCDs), and display devices including the LCDs, an in-cell polarizer, an in-cell stacked polarizer, and a liquid crystal device including these polarizers.

### Background Art

An LCD includes a linear polarization plate and a circular polarization plate to control optical activity and birefringence in display. Laminated films composed of stretched films as base films of, for example, polyvinyl alcohol have been used as these polarization plates (polarizers).

With diversification of use environment of LCDs, improvements such as weight saving, low profile, and high durability are required for LCDs.
Therefore, so-called in-cell polarizers (films) in which organic dichroic materials are applied inside LCD cells are studied, for example, as described in the following documents.

[Patent Document 1] Japanese Unexamined Patent Application Publication No. 50-98370.
[Patent Document 2] Japanese Unexamined Patent Application Publication (Translation of PCT Application) No. 8-511109.
[Nonpatent Document 1] "TN Mode TFT-LCD with In-Cell Polarizer", Tsuyoshi Ohyama et al., SID Digest, Vol.4, pp. 1106-1109.

### Disclosure of Invention

### Problems to be solved by the Invention

In recent years, LCDs have been used in displays treating much information, such as monitors for office automation (OA) and television sets, and drive systems of LCDs have been in the process of change from a passive drive system to an active drive system by active elements such as thin-film transistors (TFTs). Materials for active matrix LCDs, in particular, materials disposed between electrodes, such as liquid crystal materials and alignment film materials to which a drive voltage is applied, require excellent drive and display characteristics.

In in-cell polarizers and active matrix LCDs provided with in-cell polarizers proposed by, for example, Nonpatent Document 1, their operations are confirmed. However, no technology has been developed on improvements in drive and display characteristics for trends toward higher definition and larger scale. Therefore, these problems should be solved.

Accordingly, an object of the present invention is to provide a composition for an in-cell polarizer, an in-cell polarizer, and an in-cell stacked polarizer, which are suitable for production of a liquid crystal device having excellent drive and display characteristics in an active drive system, and a liquid crystal device including these polarizers.

As a result of extensive study, the inventors have discovered the fact that a voltage holding ratio (charge holding characteristics) of an in-cell polarizer impairs display characteristics of a liquid crystal device. A low voltage holding ratio causes insufficient drive charge applied to a liquid crystal layer, resulting in poor display characteristics such as display flicker and low contrast. Although these phenomena are not remarkable in pocket-size liquid crystal television sets, but become remarkable with an increase in display size of LCDs and display density (for example, fineness of high-definition television).

As a result of further study based on this knowledge, the inventors have discovered that control of the electrical conductivity or sodium ion concentration to a certain level or less in a dye-containing composition for production of an in-cell polarizer (composition for an in-cell polarizer) leads to an in-cell type light polarizer which has a voltage holding ratio (charge holding characteristics) suitable for an active drive and thus a liquid crystal device having excellent drive and display characteristics. The present invention has been thereby accomplished.

An aspect of the present invention is to provide a composition for an in-cell polarizer containing a dye and a solvent and having an electrical conductivity of 25 mS/cm or less (claim 1).

Another aspect of the present invention is to provide a composition for an in-cell polarizer containing a dye and a solvent and having a sodium ion concentration of 2500 ppm or less (claim 2).

Another aspect of the present invention is to provide an in-cell polarizer formed by applying the composition for an in-cell polarizer (claim 3).

Another aspect of the present invention is to provide an in-cell polarizer having a voltage holding ratio of 50% or more (claim 4).

Another aspect of the present invention is to provide an in-cell polarizer having a relative voltage holding ratio of 90% or more (claim 5).
Another aspect of the present invention is to provide a liquid crystal device including the in-cell polarizer (claim 6).
Another aspect of the present invention is to provide an in-cell stacked polarizer including a polarizer and a passivation film, the in-cell stacked polarizer having a relative voltage holding ratio of 90% or more (claim 7).
Another aspect of the present invention is to provide a liquid crystal device including the in-cell stacked polarizer (claim 8).

Advantages

According to the composition for an in-cell polarizer of the present invention, an in-cell polarizer and an in-cell stacked polarizer having a high voltage holding ratio (charge holding characteristics) which is suitable for active drive can be produced.
An active-matrix liquid crystal device including the in-cell polarizer and the in-cell stacked polarizer of the present invention, having a high voltage holding ratio (charge holding characteristics), also has excellent drive and display characteristics.

Brief Description of the Drawings

Fig. 1 is a graph showing a relationship between the electrical conductivity of in-cell polarizers of Examples 1 to 3 and Comparative Example 1 and the voltage holding ratio of liquid crystal devices of Examples 4 to 6 and Comparative Example 2.
Fig. 2 is a graph showing a relationship between the sodium ion concentration in in-cell polarizers of Examples 1 to 3 and Comparative Example 1 and the voltage holding ratio of liquid crystal devices of Examples 4 to 6 and Comparative Example 2.
Fig. 3 is a graph showing a relationship between the electrical conductivity of in-cell polarizers of Examples 2 and 3 and Comparative Example 1 and the voltage holding ratio of liquid crystal devices of Examples 7 and 8 and Comparative Example 3.
Fig. 4 is a graph showing a relationship between the sodium ion concentration of in-cell polarizers of Examples 2 and 3 and Comparative Example 1 and the voltage holding ratio of liquid crystal devices of Examples 7 and 8 and Comparative Example 3.
Fig. 5 is a schematic cross-sectional view of a transmissive twisted (TN) liquid crystal device which is an embodiment of a liquid crystal device of the present invention.

Reference Numerals

1 AR (AG) film
2 optical compensation film
3 substrate with color filter
4 ITO electrode
5 in-cell polarizer
6 spacer
7 liquid crystal layer
8 TFT, ITO electrode
9 substrate
10 luminance-enhancing film
11 prism sheet
12 diffusion plate
13 optical waveguide
14 light source
15 back light unit

Best Mode for Carrying Out the Invention

The present invention will now be described in detail. The present invention, however, should not be limited to

the following description and can be modified within the scope of the gist.

[I. Composition for in-cell polarizer]

A composition for an in-cell polarizer of the present invention contains a dye and a solvent and has at least one of, preferably both of the following characteristics:

(i) The electrical conductivity is 25 mS/cm or less.
(ii) The sodium ion concentration is 2500 ppm or less.

[Dye]

Non-limiting examples of usable dyes generally include anisotropic dyes having a soluble group within the scope of the present invention. The anisotropic dye generally shows dichroism. Preferred examples of such dyes include soluble anisotropic dyes containing basic groups such as an amino group, a sulfonium group, a pyrrole group, a 3-pyrroline group, a pyrrolidine group, a pyrazole group, a 2-pyrazoline group, a pyrazolidine group, an imidazole group, a 1,2,3-triazole group, a 1,2,4-triazole group, a piperidine group, and a piperazine group; and acidic groups such as a sulfo group, a carboxy group, and a phosphoric acid group.
Non-limiting examples of dye skeletons include azo dyes, perylene dyes, polyene dyes, and quinone dyes such as anthraquinone. In particular, benzidine, stilbene, and poly azo dyes, which are frequently present in skeletons of substantive dyes, are preferred. A dye containing at least one sulfo group, having solubility in aqueous solvents, and forming an association state, such as lyotropic liquid crystallinity, is more preferred. The most preferred dyes are azo dyes.
Dyes represented by the following formula (1) are particularly preferred.
[Chem. 1]

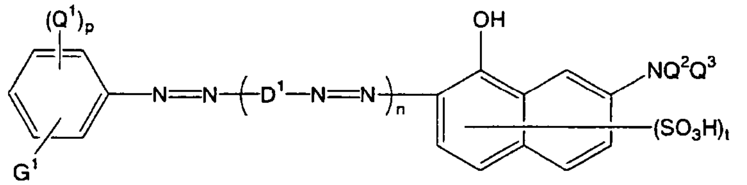

(1)

In the formula (1), $D^1$ represents a phenylene or naphthylene group having an optional substituent. A preferred phenylene group is a 1,4-phenylene group and a preferred naphthylene group is 1,4-naphthylene group because these groups show hydrophobic interaction.
Substituents of the phenylene group may be alkyl groups with a carbon number of 1-4 (e.g. methyl, ethyl, n-propyl, and n-butyl groups) that may have optional substituents, alkoxy groups with a carbon number of 1-4 (e.g. methoxy, ethoxy, n-propoxy, and n-butoxy groups) that may have optional substituents, and acylamino groups with a carbon number of 2-7 (e.g. acetylamino and benzoyl amino groups) that may have optional substituents because these groups have low polarity and improve association by hydrophobic interaction in the formation of a lyotropic liquid crystal.
Substituents of the naphthylene group may be alkoxy groups with a carbon number of 1-4(e.g. methoxy and ethoxy groups) that may have optional substituents because these groups have low polarity and improve association by hydrophobic interaction in the formation of a lyotropic liquid crystal. Examples of the substituents contained in the alkyl, alkoxy, and acylamino groups include a hydroxyl, alkyl, and alkoxy groups.
In the formula (1), $G^1$ represents a carboxy, sulfo, phosphate, or cyano groups. These substituent groups preferably have a strong attracting force. Among these, sulfo and cyano groups are more preferred in the viewpoint of attracting force over a wide pH range.
In the formula (1), $Q^1$ represents a halogen atom, a hydroxyl group, a nitro group, an amino group (preferably, an acylamino group such as acetylamino and a benzoyl amino groups) that may have an optional substituent, an alkyl group with a carbon number of 1-4 (e.g. a methyl and ethyl groups) that may have an optional substituent, alkoxy group with a carbon number of 1-3 that may have an optional substituent, a carboxy group, or a sulfo group. Among these,

preferred is a hydrogen atom, a hydroxyl group, a carboxyl group, or a sulfo group. Examples of substituents contained in the alkyl and alkoxy groups include hydroxyl, alkyl, and alkoxy groups.

In the formula (1), $Q^2$ and $Q^3$ each independently represent a hydrogen atom, an alkyl group with a carbon number of 1-4 (e.g. a methyl and ethyl groups) that may have an optional substituent, or a phenyl group that may have an optional substituent. More preferably, at least one of $Q^2$ and $Q^3$ is a hydrogen atom. Examples of substituents contained in the alkyl and phenyl groups include hydroxyl, carboxy, and sulfo groups.

In the formula (1), n is 1 or 2; p is 0 or 1; t is 1 or 2. If n is 2, two $D^1$s contained in one molecule may be same or different.

Specific examples of the dyes represented by the formula (1) are disclosed in Japanese Patent Application Nos. 2005-110535 and 2005-123029.

These dyes may be used alone, or two or more dyes may be used in arbitrary combination in arbitrary proportion.

The dyes may be used in the form of free acid or partial salt of the acid group. The salt dye and free-acid dye may be mixed. Exchange processes of the salt form are described in Items (1) to (4) in [Electrical conductivity] below.

The concentration of the dye in the composition for the in-cell polarizer depends on solubility of the dye and forming concentration of the association state such as a lyotropic liquid crystal state, and is preferably 0.1 weight % or more, more preferably 0.5 weight % or more, and the most preferably 1 weight % or more, and preferably 50 weight % or less, more preferably 30 weight % or less, and the most preferably 20 weight % or less.

In the present invention, soluble dyes are usually used. Since the dyes are soluble in water, the control of water-soluble ions such as sodium ions is difficult described in detail below. However, in the present invention, the sodium ion concentration is intentionally controlled in order to maintain excellent display characteristics.

[Solvent]

Any solvent that can dissolve or disperse the dyes described above can be used within the scope of the present invention. Non-limiting examples of usable solvents include water, organic solvents miscible with water, and mixtures thereof.

Examples of water include deionized water, distilled water, purified water treated through a filter such as a reverse osmosis film, and ultrapure water. In particular, water has a specific resistance of preferably 1 MΩcm and more preferably 10 MΩcm or more.

Concrete examples of the organic solvents include alcohols such as methyl alcohol, ethyl alcohol, and isopropyl alcohol; glycols such as ethylene glycol and diethylene glycol; and cellosolves such as methyl cellosolve and ethyl cellosolve. These solvents may be used alone, or two or more solvents may be used in arbitrary combination in arbitrary proportion.

[Other components]

The composition for the in-cell polarizer of the present invention may further contain other components in addition to the dye and the solvent. For example, when the composition for the in-cell polarizer of the present invention in the form of a dye solution is applied to a base material in a wet coating process described below, additives such as a surfactant can be added as required to improve wetting characteristics and coating characteristics to the base material.

Usable surfactants are of an anionic type, a cationic type, and a nonionic type. The concentration of the surfactant is generally 0.05 weight % or more and preferably 0.5 weight % or less of the overall composition.
In addition to these additives, the known additives described in "Additives for Coating", Edited by J. Bieleman, Willey-VCH, 2000 can also be used.

[Electrical conductivity]

One of the characteristics of the composition for the in-cell polarizer of the present invention is an electrical conductivity of 25 mS/cm or less. Since the electrical conductivity is 25 mS/cm or less, an in-cell polarizer having a high voltage holding ratio can be produced. The electrical conductivity is preferably 10 mS/cm or less, and more preferably is 1 mS/cm or less. In addition, the electrical conductivity is generally 0.2 mS/cm or more. An electrical conductivity exceeding the upper limit leads to an undesirable increase in solubility of polar impurities.

The electrical conductivity of the composition for the in-cell polarizer is measured by a two-electrode method or four-electrode method using a conductivity meter. Although the electrical conductivity can be measured by several methods defined in "Method of Testing Industrial Water", JIS K0101:1998, the four-electrode method is preferred to the two-electrode method in the view point of high measurement accuracy by guard electrodes. In order to avoid adverse effects of careers (e.g. ions) localized by an applied voltage (potential difference generated between the electrodes) in the vicinity of electrodes, measurement by applying alternate current (AC) is preferred to that by direct current (DC).

As described above, the composition for in-cell polarizers of the present invention is a mixture (solution) of a dye, a solvent, and some additives such as a surfactant used as required. Chemical species of components in the mixture and impurities derived from these components, in particular polar components and ionic components contribute to electrical conductivity. Reducing these contents ensures an electrical conductivity of 25 mS/cm or less.

Methods of reducing the impurities are as follows:

■ The chemical purity of materials for synthesis of dyes, solvents, and additives is improved by refining treatment (distillation, column, and recrystallization).
■ When dyes and additives are separated by crystallization from solvents, pH is maintained at neutral. When the solvent is water, water should de treated by any process such as ion exchanging, distillation, or RO (reverse osmosis) treatment.
■ When the composition is prepared by compounding and dissolution, containers and apparatuses are subjected to washing processes such as detergent treatment, ultrasonic cleaning, and UV ozone cleaning in order to avoid dissolution of impurities. Alternatively, use of materials from which impurities can be readily dissolved (e.g. alkali glass, synthetic resin containing a large amount of plasticizers) is avoided.
■ Compositions are tightly sealed to avoid contamination by dust during preparation (dissolution and shaking), transfer, and storage of the compositions.

Methods of reducing the polar components and the ionic components are as follows:

■ When dyes and additives are separated from a solvent by crystallization, the pH is maintained at neutral.
■ When the solvent is water, water should de treated by any process such as ion exchanging, distillation, or RO (reverse osmosis)treatment.
■ The composition is prepared by compounding and dissolution with a container and an apparatus made of Teflon (registered trade mark), boric silicate glass, or non-alkali glass.

The concentrations of the polar components and the ionic components which determine the electrical conductivity are below their detection limits in current chemical analysis. Thus, specific chemical species can not be determined. Possible species are alkali metal ions, which can be dissolved in a liquid crystal of a LCD, and organic anions having relatively low molecular weight. These are probably derived from solvents and additives such as surfactants, as well as impurities incorporated in a synthetic process of an anisotropic dye.

Since water-soluble anisotropic dyes have basic groups such as an amino group, a substituted amino group, and a sulfonium group; and acidic groups such as a sulfo group, a carboxy group, and a phosphoric acid group, the effects of counter ion components thereof are also suspicious.

Dyes having acidic groups having a moiety of a salt form are primarily used from the viewpoint of solubility for solvents. When the salt form is exchanged by the following processes (1) to (4), an excess amount of acid or base remains as impurities in dyes. Thus an attention is required.

(1) Salt exchanging by adding a strong acid such as hydrochloric acid to a solution of a dye in a salt form to separate the dye in the form of free acid, and neutralizing the acidic groups of the dye with an alkaline solution (e.g. lithium hydroxide solution) containing desirable counter ions.
(2) Salt exchanging by adding a large excess amount of neutral salt containing desirable counter ions (e.g. lithium chloride) to a solution of a dye in a salt form to separate the dye as salting-out cake.
(3) Salt exchanging by treating a solution of a dye in a salt form with a strong acidic ion-exchange resin to separate the dye in the form of free acid, and neutralizing the acidic groups of the dye with an alkaline solution containing desired counter ions (e.g. lithium hydroxide solution).
(4) Salt exchanging by passing a solution of a dye in a salt form through strong-acid ion-exchange resin preliminarily treated by an alkaline solution containing desirable counter ions (e.g. lithium hydroxide solution).

[Sodium ion concentration]

The composition for the in-cell polarizer of the present invention is characterized by a sodium ion concentration of 2500 ppm or less. The sodium ion concentration is preferably 1000 ppm or less, more preferably 100 ppm or less. The lower limit is usually 10 ppm or more. Exceeding the upper limit of the sodium ion concentration leads to undesirable elution into the liquid crystal device (liquid crystal layer) and an adverse affect to electrical characteristics. For example, the sodium ion concentration is controlled within the range of the present invention by the several methods that are shown to reduce impurities as described above.

The sodium ion concentration in the composition for the in-cell polarizer of the present invention is determined by a combination of an ion-selective electrode of which electrical potential varies in response to the concentration of spicific ions in the composition and a reference electrode. Although, it can be measured by several methods, such as flame photometry, flame atomic absorption spectrometry, and ion chromatography that are defined in "Method of Testing Industrial Water" in JIS K0101:1998, the ion-electrode measuring method defined in "General Rule of Method of Measuring by Ion Electrode", JIS K0122:1998 is preferred because a comparatively high sodium ion concentration can be measured directly. Use of an ion meter with an ion-selective electrode without pH adjusting by a buffer solution is more preferred because a change in dissociation state by pH can be suppressed.

[II. In-cell polarizer]

An in-cell polarizer of the present invention has at least one, preferably two or more of the following characteristics:

(i) The in-cell polarizer is formed by applying the composition for the in-cell polarizer of the present invention.
(ii) The voltage holding ratio is 50% or more.
(iii) The relative voltage holding ratio is 90% or more.

[Anisotropy]

The in-cell polarizer of the present invention is a dye film having electromagnetic anisotropy in any two directions selected from the three directions in a three-dimensional coordinate system, i.e. the thickness direction of dye film and two orthogonal in-plane directions. The in-cell polarizer particularly has absorption anisotropy among the electromagnetic characteristics. Other than absorption anisotropy, the in-cell polarizer has optically anisotropic characteristics such as absorption and reflection of optical characteristics such as refraction and electrically anisotropic characteristics such as resistance and capacitance. Examples of the polarizers include linear polarization films, circular polarization films, retardation films, and anisotropically conductive films. Anisotropy such as absorption of a dye film can be confirmed by, for example, rotation on a light box provided with a polarizing film such as an iodine-based film.

[Applying of composition for in-cell polarizer]

One of the characteristics of the in-cell polarizer of the present invention is that the polarizer is formed by applying the composition for the in-cell polarizer of the present invention. Applying is generally performed to a substrate material (base material). The state of shaping is not restricted, and preferably is a film or a layer.

■ Base material:

The base material for applying is not restricted within the scope of the present invention. Examples of the base material include transparent substrates, such as glass and synthetic resin, and a silicon substrate. The composition for the in-cell polarizer of the present invention may be directly applied to this substrate material. Alternatively, after deposition of a conductive thin film and/or an insulating thin film alone or by lamination on the base material, and then the composition for the in-cell polarizer of the present invention may be applied. Examples of the conductive thin films include transparent electrodes such as indium tin oxide (ITO) and metal electrodes such as aluminum and gold. Examples of the insulating thin films include polymers such as polyimide resins and polysiloxanes and silicon oxide. Furthermore, in order to control the alignment direction of the dye contained in the polarizer, an alignment layer may be applied onto a surface of the base material according to a method described in "Ekisho Binran (Handbook of Liquid Crystal)", MARUZEN Co., Ltd, published on October 30, 2000, pp. 226 to 239.

Since this base material is used as a substrate of a liquid crystal device described below, the shape and the thickness of the base material are preferably fit to a target liquid crystal device. The thickness of the base material is generally 10 $\mu$m or more and preferably 100 $\mu$m or more, and generally 10 mm or less and preferably 1 mm or less.

■ Method of applying:

The composition for the in-cell polarizer of the present invention can be applied, for example, by a wet coating process. The wet coating process may be a conventional one, in which the composition for an in-cell polarizer of the present invention is prepared as an applying solution, is applied on the substrate (base material), and is dried, and a dye is aligned and layered. The wet coating process is disclosed in "Kouting Kougaku (Coating Technology)" by Youji Harasaki, Asakura Publishing Co., Ltd, published on March 20, 1971, pp. 253 to 277, "Bunshi Kyoucho Zairyo no Sousei

to Ouyo (Creation and Application of Molecular Collaborative Materials)", under the editorship of Kunihiro Ichimura, CMC Publishing Co., Ltd, published on March 3, 1998, pp. 118 to 149. Alternatively, the composition may be applied onto a rubbed substrate by, for example, spin coating, spray coating, bar coating, roll coating, or blade coating.

A significantly low dye concentration in the composition for an in-cell polarizer of the present invention precludes sufficient development of dichroic characteristics. A significantly high concentration precludes the formation of the film. Thus, the concentration is preferably within the range described above.

The coating temperature is preferably in the range of 0°C to 80°C and the coating humidity is preferably in the range of 10%RH to 80%RH. The drying temperature of the coating is preferably in the range of 0°C to 120 ° C and the drying humidity is preferably in the range of 10%RH to 80%RH.

When the in-cell polarizer of the present invention is formed on a material by a wet coating process, the dried thickness of the in-cell polarizer of the present invention is preferably 50 nm or more and more preferably 100 nm or more, and preferably 50 μm or less, more preferably 20 μm or less, and particularly preferably 1 μm or less.

[Voltage holding ratio]

Another characteristic of the in-cell polarizer of the present invention is a voltage holding ratio of 50% or more. A voltage holding ratio of 50 % or more can maintain or improve drive and display characteristics of a liquid crystal display element. The voltage holding ratio is preferably 70% or more, and more preferably 85% or more. A rate below the lower limit causes a decreased overall voltage holding ratio of the liquid crystal device, resulting in generation of flicker(display flicker), and low contrast.

Electron holding characteristics can be measured by a voltage holding ratio according to " Den-atsu Hojiritsu Soukutei Houhou (Measurement of Voltage holding ratio)" described in " Ekisyou Hyouji Paneru oyobi sono Kousei Zairyo no Sokutei Houhou (Measurements on Liquid Crystal Display Panel and its Materials)", Standard ED-2521A, Japan Electronics and Information Technology Industries Association (JEITA).

An in-cell polarizer having a voltage holding ratio of 50% or more can be formed by applying the composition of the present invention, by a dry process such as thermal vapor deposition, or by a transfer process using an LB film or a dry film resist. Preferred is applying a composition of the present invention as described above.

[Relative voltage holding ratio]

The composition for the in-cell polarizer of the present invention is characterized by a relative voltage holding ratio of 90% or more. A relative voltage holding ratio of 90 % or more can maintain or improve drive and display characteristics of a liquid crystal display element.

Throughout the specification, the term "relative voltage holding ratio" represents the percentage of the voltage holding ratio of the liquid crystal device with the in-cell polarizer when the voltage holding ratio of a liquid crystal device without a polarizer is 100%. The voltage holding ratio is measured as described above.

[Eq. 1]

Relative voltage holding ratio (%)

= {(voltage holding ratio of liquid crystal device with in-cell polarizer)/(voltage holding ratio of liquid crystal device without in-cell polarizer)}×100

The relative voltage holding ratio of the in-cell polarizer of the present invention is generally 90% or more and preferably 95% or more, depending on the fineness (number of pixels) and the screen size. A rate below the lower limit leads to a decrease in voltage holding ratio in the entire liquid crystal device, resulting in flicker (display flicker)and low contrast.

The in-cell polarizer having a relative voltage holding ratio of 90% or more can be formed by applying the composition of the present invention described above, by a dry process such as thermal vapor deposition, or by a transfer

process using an LB film or a dry film resist. Preferred is applying the composition of the present invention as described above.

[Other]

The thickness of the in-cell polarizer of the present invention is generally 1 nm or more and preferably 10 nm or more, and generally 50 $\mu$m or less and preferably 5 $\mu$m or less, although the in-cell polarizer has all of the characteristics of (i) to (iii) described above.

[III. Liquid crystal device]

The liquid crystal device of the present invention includes the in-cell polarizer of the present invention. Generally, in the liquid crystal device including a liquid crystal material disposed between two substrates, the in-cell polarizer of the present invention is disposed at the inner face of at least one of the substrates (a side adjacent to the liquid crystal material).

The basic configuration of the liquid crystal device of the present invention is shown, for example, in Fig.1 in "Furatto Paneru Dyisupurei Daijiten (Comprehensive Dictionary of Flat Panel Display)", by Tatsuo Uchida et al., Kogyo Chosakai Publishing, Inc., published on December 25, 2001, P. 45. The liquid crystal device of the present invention includes a pair of the opposed substrates, a pair of oriented films (layer for aligning liquid crystal material)provided inside these substrates, a liquid crystal layer (a layer holding liquid crystal material) disposed between the substrates (liquid crystal cells), and electrodes (for example, indium tin oxide (ITO) electrode)applying an electric field to the liquid crystal layer. By applying an electric field to the liquid crystal layer from the electrodes, the alignment of the liquid crystal is changed to control light transmission and blocking. The in-cell polarizers of the present invention are disposed between the alignment film and the polarization layer, and between the alignment film and the electrode.

Specific examples of the display modes for the liquid crystal device include a TN mode, an STN mode, a DSM mode, an ECB mode, a VA mode, a $\Pi$ cell, an OCB mode, a HAN mode, a phase-transition cholesteric liquid crystal mode, an ECE mode, a ferroelectricity liquid crystal mode, an antiferroelectric liquid crystal mode, a guest-host liquid crystal mode, an IPS mode, a polymer composite mode, a polymer liquid crystal mode, and a photo luminescent mode, described in "Furatto Paneru Dyisupurei Daijiten (Comprehensive Dictionary of Flat Panel Display)", by Tatsuo Uchida et al., Kogyo Chosakai Publishing, Inc., published on December 25, 2001, pp. 54 to 83. The liquid crystal device of the present invention may be applicable to all of these modes.

A specific configuration of the liquid crystal device of the present invention is shown in Fig.5. Fig.5 is a schematic view of a configuration of a transmission color liquid crystal device of a TN mode according to the present invention. The liquid crystal device shown in Fig.5 is the transmission color liquid crystal device of the TN mode and includes an AR (AG) film 1, an optical compensation film 2, a substrate 3 with a color filter, an indium tin oxide (ITO) electrode 4, an oriented film (an oriented layer and polarizer) 5, a spacer 6, a liquid crystal layer 7, an ITO TFT electrode 8, and a substrate 9. This device is used with a back light unit 15 comprising a luminance-enhancing film 10, a prism sheet 11, a diffusion plate 12, an optical waveguide 13, and a light source 14. The in-cell polarizer of the present invention is used as the alignment film (the alignment layer and polarizer) 5. Either one or both of the alignment films 5 may be the in-cell polarizer of the present invention. When the in-cell polarizer of the present invention functions as an alignment layer, the alignment layer may be omitted.

The configuration of the liquid crystal device in Fig.5 is merely one embodiment. Any modification that does not impair the function of the liquid crystal device may be employed. For example, the arrangement, shape, and order of lamination may be changed, some of the components may be removed or integrated into a single unit, and other components may be added.

For example, the liquid crystal device of the present invention may be a reflective liquid crystal device without an auxiliary light source such as a back light, a transmissive/tralsflective liquid crystal device provided with a front light and a side edge light, a monochrome liquid crystal device without a micro color filter, or a field sequence liquid crystal device.

The position of the in-cell polarizer of the present invention is not restricted, and may be between the electrode and the substrate or between the electrode and the liquid crystal layer. Furthermore, the in-cell polarizer of the present invention may be provided with other functional layers, such as an alignment film, a phase difference film e.g. a $\lambda/4$ plate, a reflection film, a light diffusion film, and a light absorption film alone or in combination. Furthermore, in the liquid crystal device of which an electrode is provided on only one substrate of the two substrates sandwiching a liquid crystal layer as in an IPS mode, the other electrode-free substrate and various films formed on the substrates may have an effect on electrical characteristics of the liquid crystal device. Therefore, the in-cell polarizer of present invention improves drive and display characteristics.

As shown in Fig.5, when the in-cell polarizer is applied to a liquid crystal device in which the in-cell polarizer of the present invention is disposed inside an electrode which drives a liquid crystal material by the electric field effect

(the electric field is applied to the in-cell polarizer of the present invention), charge holding characteristics (voltage holding ratio) are improved. This structure is particularly advantageous in liquid crystal devices having common electrodes and address electrodes opposed each other between substrates such as a twist nematic (TN) mode and a vertical alignment (VA mode). It is also useful for an in-plane switching (IPS) mode in which these electrodes are disposed on a single substrate.

Furthermore, forming an electrode on the in-cell polarizer of the present invention suppresses dissolution of impurities, which decrease charge holding characteristics (voltage holding ratio), in a liquid crystal layer.

[IV. In-cell stacked polarizer]

An in-cell stacked polarizer of the present invention is a laminate of the in-cell polarizer of the present invention described above and a passivation film. The term "passivation film" represents a layer which imparts mechanical strength to the in-cell polarizer and suppresses elution of impurities from the in-cell polarizer into the liquid crystal layer.

The type of the passivation film is not restricted within the scope of the present invention, and a film made of transparent polymer material is generally used. The term "transparent" must be transparent to at least a light source used for a target liquid crystal device. Examples of these polymer materials include triacetate resins, acrylate resins, polyester resins, polyimide resins, triacetyl cellulose resins, and urethane resins. The passivation film may be made of a single material or any combination in any proportion of these polymers.

The passivation film is generally laminated with the in-cell stacked polarizer of the present invention. The order and means of lamination are not restricted. For example, lamination may be carried out by applying a resin solution to the in-cell stacked polarizer by any known coating process such as screen printing, or laminating the polarizer with a transfer film. The passivation film may be formed over the entire surface of the in-cell stacked polarizer, or formed by patterning at positions corresponding to pixels of the liquid crystal device. Examples of patterning include photolithography with a resist after forming the passivation film and mask exposure after laminating a photosensitive passivation film. Before the passivation film is laminated, the surface of the in-cell stacked polarizer is stabilized in order to improve the process endurance. A means for stabilization is insolubilization by a polyvalent metal salt, which is application of dye laking described in "Gosei Senryou no Kagaku (Chemistry of Synthetic Dye)" by Kenzo Konishi et al., Maki Shoten, published on March 15, 1974, pp. 388 to 404. The thickness of the passivation film is not restricted, and is generally 1 nm or more, preferably 10 nm or more, and generally 100 μm or less, preferably 10μm or less, depending on the target liquid crystal device. The passivation film may have a single or multiple layer structure. Since the drive voltage of the liquid crystal device requires low as much as possible, the passivation film is preferably as much as thin within the scope that can achieve the above object. Furthermore, reflection caused by a difference in refractive indices at interfaces between the films decreases the light utilization factor of the liquid crystal device. Thus, the passivation film preferably has a single layer structure.

The in-cell stacked polarizer of the present invention is used as a polarizer of the liquid crystal device (the liquid crystal device of the present invention), like the in-cell polarizer of the present invention. In this case, the in-cell polarizer is disposed adjacent to the substrate, whereas the passivation film is disposed adjacent to the liquid crystal layer. Either one or both of the polarizers of the liquid crystal device may be the in-cell stacked polarizer(s) of the present invention.

[Examples]

The present invention will now be described in further detail with reference to Examples. The scope of the present invention, however, is not limited to those described Examples.

[I. Composition for in-cell polarizer]

[Example 1]

Hydrochloric acid was added to an aqueous solution of a dye in a salt form of Formula (2), which had been prepared through a synthetic process. The dye in a free-acid form was neutralized at a pH of 7 with a sodium hydroxide solution. The resulting salt-exchanged dye (1.5 g) was added to 8.5 g of ultrapure water having a specific resistance of 18 MΩcm. The solution was agitated to dissolve the dye and was filtrated to prepare a composition for the in-cell polarizer (a composition for an in-cell polarizer of Example 1).

[Chem. 2]

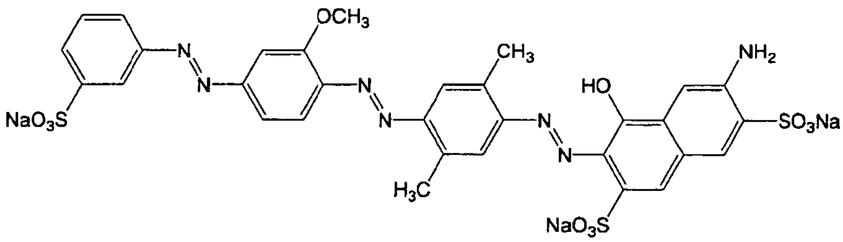

(2)

The electric conductivity of the composition for the in-cell polarizer of Example 1 that was measured with a conductivity meter (made by Horiba, Ltd.) by an AC two-electrode method according to JIS K0101 was 13.5 mS/cm.

Furthermore, the concentration of sodium ion of the composition for the in-cell polarizer of Example 1 measured using an ion meter (Horiba, Ltd.) by a sodium ion electrode method according to JIS K0101 was 1000 ppm.

The composition for the in-cell polarizer of Example 1 was applied to a glass substrate provided with ITO electrodes (electrode area 8 mm by 8 mm) by an applicator (IMOTO MACHINERY CO., LTD) having a gap of 10 μm. The glass substrate had a surface provided with an aligned film of polyimide (made by Hitachi Chemical Company, Ltd) formed by screen printing. The aligned polyimide film had a thickness of about 80 nm, and had been preliminarily subjected to rubbing treatment with nylon cloth. The coating was spontaneously dried to prepare a dye film. The substrate with the dye film was rotated on a light box having an iodine polarizing film. The substrate exhibited absorption anisotropy and functioned as a polarizer.

In order to measure electron holding characteristics of the dye film (the polarizer), silver paste (Fujikura Kasei Co., Ltd., Commercial name: Dotite) as an opposite electrode material was applied to the polarizer, was dried at 180°C for 30 minutes, and was cooled to room temperature. The voltage holding ratio of the polarizer was measured according to JEITA Standard ED-2521A, with a liquid crystal physical property evaluation system 6254 made by Toyo Corporation. The measurement conditions were as follows: The applied voltage was 5 V; the pulse width was 60 μsec; the cycle length was 60 Hz; and the temperature was 25°C. The voltage holding ratio of the polarizer was 56.6%.

[Comparative Example 1]

A composition for in-cell polarizer was prepared as in Example 1 except that deionized water prepared with an ion-exchange resin was used instead of the ultrapure water used Example 1, and a dye salt-exchanged with a weak alkaline at a pH of substantially 8 was used instead of the salt-exchanged dye, which was neutralized at a pH of 7 (a composition for an in-cell the polarizer of Comparative Example 1).

The electric conductivity of and the sodium ion concentration in the composition for the in-cell polarizer of Comparative Example 1 were measured as in Example 1. The electronic conductivity was 27.0 mS/cm. The sodium ion concentration was 2900 ppm.

Using the composition for the in-cell polarizer of Comparative Example 1, a polarizer was formed as in Example 1. The voltage holding ratio of the polarizer was 34.4%.

[Example 2]

A composition for an in-cell polarizer was prepared as in Example 1 except that the dye salt exchanged with a weak alkaline at a pH of substantially 8 was used instead of the salt exchanged dye neutralized at pH 7 (a composition for an in-cell polarizer of Example 2).

The electronic conductivity and the sodium ion concentration of the composition for the in-cell polarizer of Example 2 were measured as in Example 1. The electronic conductivity was 15.3 mS/cm. The sodium ion concentration was 2200 ppm.

[Example 3]

A composition for an in-cell polarizer was prepared as in Example 1 except that deionized water prepared with an ion-exchange resin was used instead of the salt-exchanged dye neutralized at a pH of 7 used in Example 1, instead of the ultrapure water used in Example 1 (a composition for an in-cell polarizer of Example 3).

The electric conductivity and the sodium ion concentration of the composition for the in-cell polarizer of Example

3 were measured as in Example 1. The electric conductivity was 22.0 mS/cm. The sodium ion concentration was 2200 ppm.

[II. liquid crystal device 1]

The compositions for the in-cell polarizer of Examples 1 to 3 and Comparative Example 1 were each applied to glass substrates provided with ITO electrodes (electrode area: 8 mm by 8 mm) by an applicator (IMOTO MACHINERY CO., LTD) having a gap of 2 μm. The coating was spontaneously dried at room temperature to prepare dye films (in-cell polarizers). The resulting dye films were sufficiently dried at 180°C for 30 minutes to prepare substrates including the in-cell polarizers (hereinafter referred to as "substrate for LCD")

Among the resulting substrates for LCDs, two substrates to which the same composition for in-cell polarizer was applied were bonded to each other such that the polarizers faced each other at the inside, in which the composition was mixed with a silica bead spacer having a particle diameter of 5 μm (made by SEKISUI FINE CHEMICAL CO., LTD., Commercial name: Micropearl) and epoxy resin (made by Mitsui Chemicals, Inc., Commercial name: Structbond) into a sealant (spacer) that was applied at the periphery of the substrate to prepare a liquid crystal device cell. A fluorinated liquid crystal material (made by Merck & Co., Inc, Commercial name: ZLI-4792) was injected into each cell to prepare a liquid crystal device. Liquid crystal devices prepared from the compositions for the in-cell polarizers of Examples 1 to 3 and Comparative Example 1 are referred to as liquid crystal devices of Examples 4 to 6 and Comparative Example 2.

In order to calculate the relative voltage holding ratio, liquid crystal devices were prepared as in Examples 4 to 6 and Comparative Example 2 except that the compositions for in-cell polarizers were not applied (a liquid crystal device of Reference Example 1).

In each of the resulting liquid crystal devices of Examples 4 to 6, Comparative Example 2, and Reference Example 1, the voltage holding ratio was measured under the conditions described in Example 1. In addition, the relative voltage holding ratio was calculated. The resulting voltage holding ratios and the relative voltage holding ratios of the liquid crystal devices, the electric conductivity and the sodium ion concentrations of the compositions for the in-cell polarizers of liquid crystal devices are shown in Table 1.

[Table 1]

Table 1

| Composition for in-cell polarizer | | | Liquid crystal device | | |
|---|---|---|---|---|---|
| | Electric conductivity (mS/cm) | Sodium ion concentration (ppm) | | Voltage holding ratio (%) | Relative voltage holding ratio (%) |
| Example 1 | 13.5 | 1000 | Example 4 | 97.0 | 97 |
| Example 2 | 15.3 | 2200 | Example 5 | 93.5 | 94 |
| Example 3 | 22.0 | 2200 | Example 6 | 95.9 | 96 |
| Comparative Example 1 | 27.0 | 2900 | Comparative Example 2 | 86.0 | 86 |
| - | - | - | Reference Example 1 | 99.7 | - |

As shown in Table 1, the liquid crystal devices of Examples 4 to 6 including the compositions for in-cell polarizers of Examples 1 to 3 exhibit superior charge holding characteristics (relative voltage holding ratios)to that of the liquid crystal device of Comparative Example 2 including the composition for in-cell the polarizer of Comparative Example 1.

Fig. 1 is a graph showing the relationship between the electric conductivity of the compositions for the in-cell polarizers of Examples 1 to 3 and Comparative Example 1 and the voltage holding ratio of Examples 4 to 6 and Comparative Example 2. Fig. 2 is a graph showing the relationship between the sodium ion concentration of the compositions for the in-cell polarizer of Examples 1 to 3 and Comparative Example 1 and the voltage holding ratio of Examples 4 to 6 and Comparative Example 2. In Figs. 1 and 2, each filled circle represents the composition for the in-cell polarizer of each Example and the corresponding liquid crystal device, whereas the hollow circle represents the composition for in-cell polarizer of the Comparative Example and the corresponding liquid crystal device.

In Figs. 1 and 2, the liquid crystal devices of Examples 4 to 6 including the in-cell polarizers of Examples 1 to 3, each having an electric conductivity of 25 mS/cm or less and a sodium ion concentration of 2500 ppm or less, have higher voltage holding ratios than that of the liquid crystal device of Comparative Example 2 including the composition

for the in-cell polarizer of Comparative Example 1, which does not have an electric conductivity and a sodium ion concentration satisfying the criterion. Thereby, the liquid crystal devices of Examples 4 to 6 are expected to have excellent drive and display characteristics.

[III. Liquid crystal device 2]

Polyimide (made by JSR, Commercial name: Optomer) was applied to glass substrates provided with ITO electrodes (electrode area: 8mm by 8 mm) by a spin coater (made by Oshigane, Commercial name: SC-200) at 3000 rpm for 30 seconds. The substrates were fired at 180°C for 30 minutes then at 240°C for 1 hour to prepare ITO substrates provided with polyimide resin films. The compositions for in-cell polarizers of Examples 2 and 3 and Comparative Example 1 were applied on the polyimide resin films by an applicator (IMOTO MACHINERY CO., LTD) having a gap of 2 μm and were spontaneously dried to prepare dye films. The resulting substrates including dye films were rotated on a light box having an iodine polarizing film. The dye films exhibited absorption anisotropy and functioned as polarizers. The substrates including the in-cell polarizers were dried at 180°C for 30 minutes to prepare substrates for LCDs.

Among the resulting substrates for LCD, two substrates to which the same composition for in-cell polarizer was applied were bonded each other as in Examples 4 to 6 and comparative example 1 to prepare a liquid crystal device cell. A fluorinated liquid crystal material (made by Merck & Co., Inc, Commercial name: ZLI-4792) was injected into each cell to prepare a liquid crystal device. Liquid crystal devices prepared from the compositions for the in-cell polarizers of Examples 2 and 3 and Comparative Example 1 are referred to as liquid crystal devices of Examples 7 and 8 and Comparative Example 3.

In order to calculate the relative voltage holding ratio, liquid crystal devices were prepared as in Examples 7 and 8, and comparative Example 3 except that compositions for in-cell polarizers were not applied (a liquid crystal device of Reference Example 2).

In each of the resulting liquid crystal devices of Examples 7 and 8, and Comparative Example 3, and Reference Example 2, the voltage holding ratio was measured under conditions described in Example 1. In addition, the relative voltage holding ratio was calculated. The resulting voltage holding ratios and the relative voltage holding ratios of the liquid crystal devices, the electric conductivity and the sodium ion concentrations of the compositions for in-cell polarizers of the liquid crystal devices are shown in Table 2.

[Table 2]

Table 2

| Composition for in-cell polarizer | | | Liquid crystal device | | |
|---|---|---|---|---|---|
| | Electric conductivity (mS/cm) | Sodium ion concentration (ppm) | | Voltage holding ratio (%) | Relative voltage holding ratio (%) |
| Example 2 | 15.3 | 2200 | Example 7 | 96.0 | 96 |
| Example 3 | 22.0 | 2200 | Example 8 | 90.2 | 96 |
| Comparative Example 1 | 27.0 | 2900 | Comparative Example 3 | 79.5 | 80 |
| - | - | - | Reference Example 2 | 99.7 | - |

As shown Table 2, the liquid crystal devices of Examples 7 and 8 including the compositions for in-cell polarizers of Examples 2 and 3 exhibit superior charge holding characteristics (relative voltage holding ratios) to that of the liquid crystal device of Comparative Example 3 including the composition for the in-cell polarizer of Comparative Example 1.

Fig. 3 is a graph showing the relationship between the electric conductivity of compositions for in-cell polarizer of Examples 2 and 3 and Comparative Example 1 and the voltage holding ratio of Examples 7 and 8 and Comparative Example 3. Fig. 4 is a graph showing the relationship between the sodium ion concentration of the compositions for in-cell polarizer of Examples 2 and 3 and Comparative Example 1 and voltage holding ratio of Examples 7 and 8 and Comparative Example 3. In Figs. 3 and 4, each filled circle represents the composition for the in-cell polarizer of each Example and the corresponding liquid crystal device, whereas the hollow circle represents the composition for the in-cell polarizer of the Comparative Example and the corresponding liquid crystal device.

In Figs. 3 and 4, the liquid crystal devices of Examples 7 and 8 including the in-cell polarizers of Examples 2 and 3, each having an electric conductivity of 25 mS/cm or less and a sodium ion concentration of 2500 ppm or less,

have higher voltage holding ratios than that of the liquid crystal device of Comparative Example 3 including the composition for the in-cell polarizer of Comparative Example 1, which does not have an electric conductivity and a sodium ion concentration satisfying the criterion. Thereby, the liquid crystal devices of Examples 7 and 8 are supposed to have excellent drive and display characteristics.

[IV. Liquid crystal device 3]

The compositions for the in-cell the polarizers of Examples 2 and 3 and Comparative Example 1 were applied to glasses substrates provided with ITO electrodes (electrode area: 8 mm by 8 mm) by an applicator (IMOTO MACHINERY CO., LTD) having a gap of 2 μm to prepare substrates having dye films (in-cell polarizers). Each glass substrate had a surface provided with an aligned film of polyimide (made by Hitachi Chemical Company, Ltd) formed by screen printing. The aligned polyimide film had a thickness of about 80 nm, and had been preliminarily subjected to rubbing treatment with nylon cloth. Furthermore, polyimide (JSR, Commercial name: Optomer) was applied to the in-cell polarizers by a spin coater (made by Oshigane, Commercial name: SC-200) at 300 rpm for 30 seconds. Each substrate was fired at 180°C for 30 minutes then at 240°C for 1 hour to prepare an in-cell stacked polarizer ITO substrate on which a polyimide resin film(passivation film) was stacked.

Among the resulting substrates for LCDs, two substrates to which the same composition for in-cell polarizer was applied were bonded to each other as in Examples 4 to 6 and Comparative Example 1 to prepare a liquid crystal device cell. A fluorinated liquid crystal material (made by Merck & Co., Inc, Commercial name: ZLI-4792) was injected into each cell to prepare a liquid crystal device. Liquid crystal devices prepared from the compositions for the in-cell polarizers of Examples 2 and 3 and Comparative Example 1 were referred to as liquid crystal devices of Examples 9 and 10 and Comparative Example 4.

In order to calculate the relative voltage holding ratio, liquid crystal devices were prepared as in Examples 9 and 10 and Comparative Example 4, except that composition for in-cell polarizers was not applied (a liquid crystal device of Reference 3).

In each of the resulting liquid crystal devices of Examples 9 and 10, Comparative Example 4, and Reference Example 3, the voltage holding ratio was measured under conditions described in Example 1. In addition, the relative voltage holding ratio was calculated. The resulting voltage holding ratios and the relative voltage holding ratios of the liquid crystal devices, the electric conductivity and the sodium ion concentrations of the compositions for in-cell polarizers of the liquid crystal devices are shown in Table 3.

[Table 3]

| Composition for in-cell polarizer | | | Liquid crystal device | | |
|---|---|---|---|---|---|
| | Electric conductivity (mS/cm) | Sodium ion concentration (ppm) | | Voltage holding ratio (%) | Relative voltage holding ratio (%) |
| Example 2 | 15.3 | 2200 | Example 9 | 95.0 | 95 |
| Example 3 | 22.0 | 2200 | Example 10 | 94.6 | 95 |
| Comparative Example 1 | 27.0 | 2900 | Comparative Example 4 | 89.4 | 90 |
| - | - | - | Reference Example 3 | 99.6 | - |

As shown in Table 3, the liquid crystal devices of Examples 9 and 10 including the compositions for the in-cell polarizers of Examples 2 and 3 exhibit superior charge holding characteristics (relative voltage holding ratios) to that of the liquid crystal device of Comparative Example 4 including the composition for in-cell the polarizer of Comparative Example 1. Thereby, the liquid crystal devices of Examples 9 and 10 are expected to have excellent drive and display characteristics.

Also, in the liquid crystal device of Comparative Example 4 including the composition for the in-cell polarizer of Comparative Example 1, applying to a resin layer adjacent to the dye film improves the charge holing rate characteristics compared with the liquid crystal device of Comparative Examples 2 and 3 including the composition for the in-cell polarizer of Comparative Example 1.

Although the present invention is described above with reference to the specific embodiments, it is obvious for

persons skilled in the art that various modifications can be employed within the gist and the scope of the present invention.
The present application is based on Japanese Patent Application No.2005-94098 filed on March 29, 2005, and Japanese Patent Application No.2006-82689 filed on March 24, 2006, the entire content of which is incorporated hereinto by reference.

Industrial Applicability

The composition for the in-cell polarizer of the present invention is preferably used as a material for in-cell polarizers and in-cell stacked polarizers of liquid crystal devices.
The in-cell polarizer of the present invention and the in-cell stacked polarizer of the present invention are preferably used in various liquid crystal devices.
The liquid crystal device of the present invention is preferably used in various applications, such as image display devices, text display devices, and light bulbs. The device can be more preferably used in various applications, such as television sets, monitors, and projectors, as active-matrix liquid crystal devices including active elements such as thin film transistors (TFTs).

## Claims

**1.** A composition for an in-cell polarizer comprising:

a dye and a solvent,

wherein the electric conductivity is 25 mS/cm or less.

**2.** A composition for an in-cell polarizer comprising:

a dye and a solvent,

wherein the sodium ion concentration is 2500 ppm or less.

**3.** An in-cell polarizer formed by applying the composition for in-cell polarizer according to Claim 1 or Claim 2.

**4.** An in-cell polarizer,
wherein the voltage holding ratio is 50% or more.

**5.** An in-cell polarizer,
wherein the relative voltage holding ratio is 90% or more.

**6.** A liquid crystal device comprising the in-cell polarizer according to any one of Claims 3 to 5.

**7.** An in-cell stacked polarizer comprising:

a polarizer and a passivation film,

wherein the relative voltage holding ratio is 90% or more.

**8.** A liquid crystal device comprising the in-cell stacked polarizer according to Claim 7.

FIG. 1

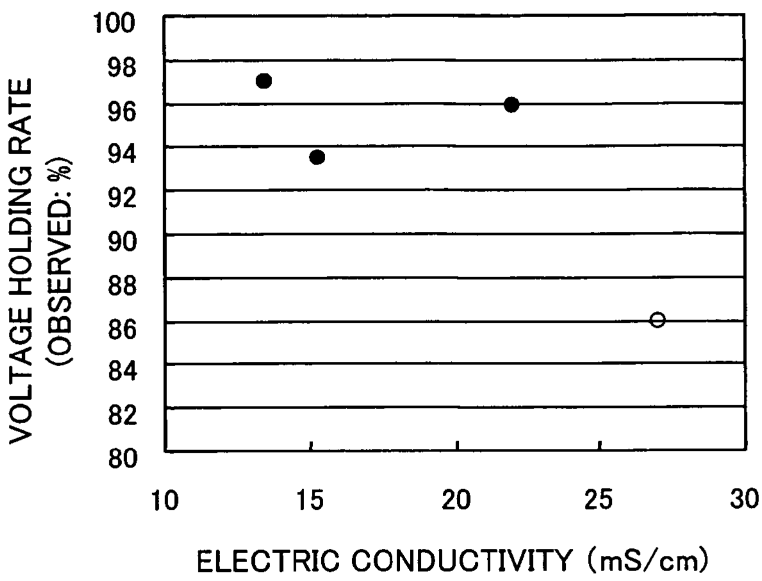
VOLTAGE HOLDING RATE
(OBSERVED: %)
100
98
96
94
92
90
88
86
84
82
80
10
15
20
25
30
ELECTRIC CONDUCTIVITY (mS/cm)

FIG. 2

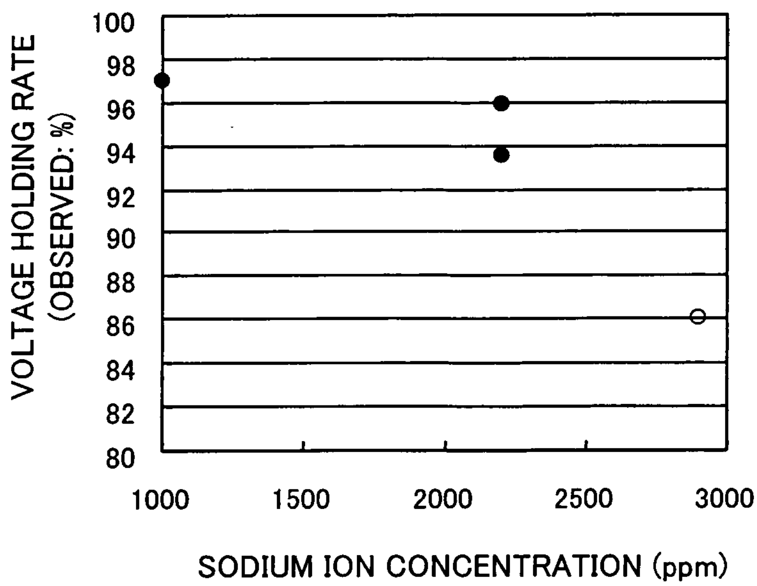
VOLTAGE HOLDING RATE
(OBSERVED: %)
100
98
96
94
92
90
88
86
84
82
80
1000
1500
2000
2500
3000
SODIUM ION CONCENTRATION (ppm)

FIG. 3

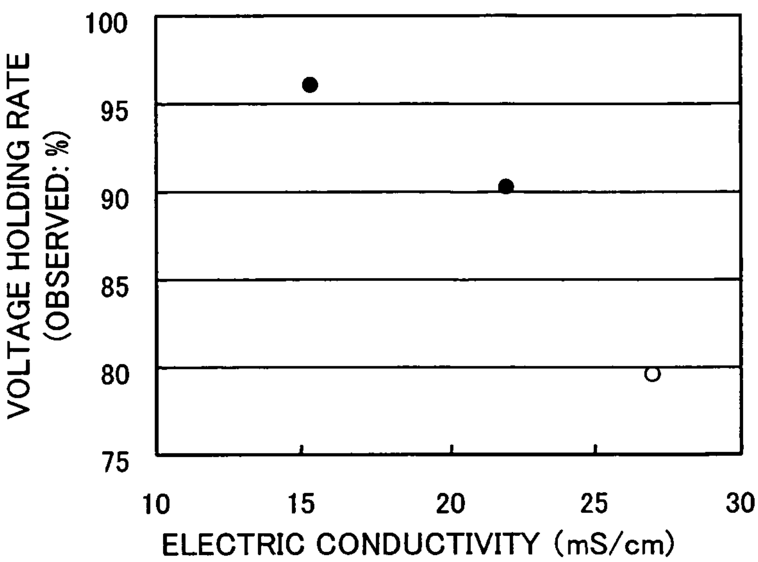
100
95
90
85
80
75
VOLTAGE HOLDING RATE
(OBSERVED: %)
10
15
20
25
30
ELECTRIC CONDUCTIVITY (mS/cm)

FIG. 4

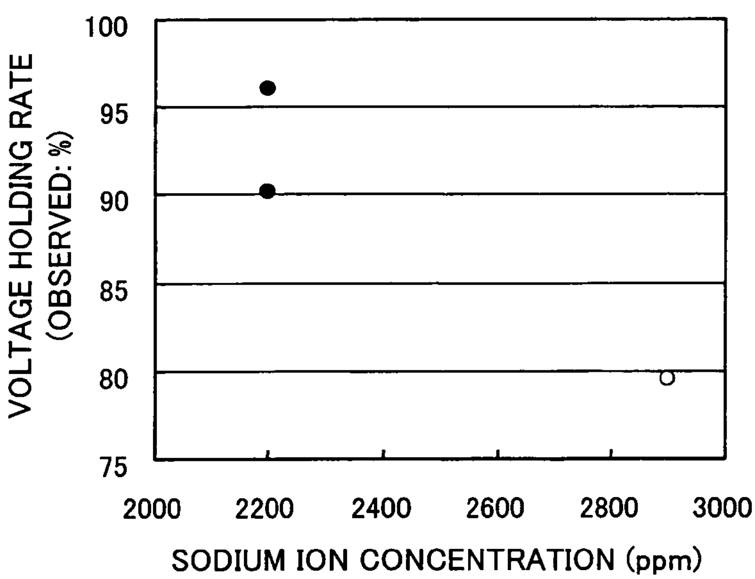
100
95
90
85
80
75
VOLTAGE HOLDING RATE
(OBSERVED: %)
2000
2200
2400
2600
2800
3000
SODIUM ION CONCENTRATION (ppm)

FIG. 5

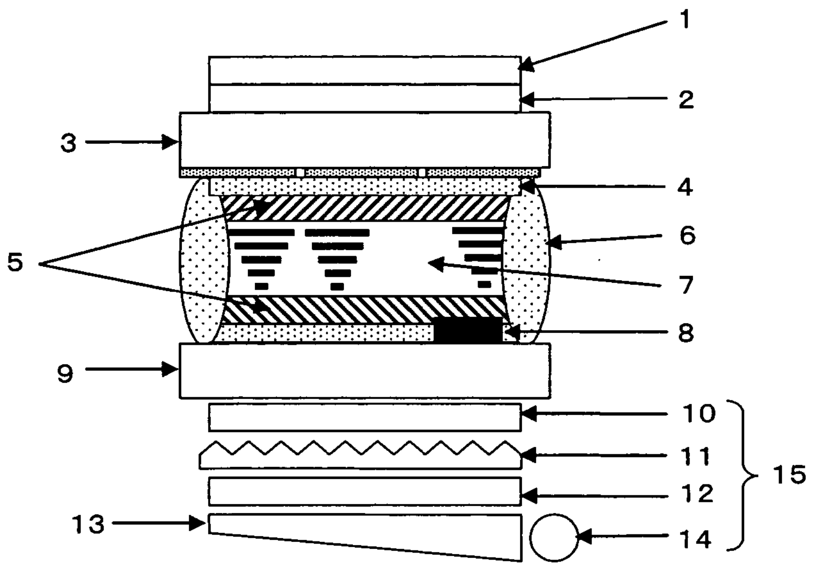

**INTERNATIONAL SEARCH REPORT**

International application No.
PCT/JP2006/306000

A. CLASSIFICATION OF SUBJECT MATTER
*G02F1/1335*(2006.01), *G02B5/30*(2006.01)

According to International Patent Classification (IPC) or to both national classification and IPC

B. FIELDS SEARCHED

Minimum documentation searched (classification system followed by classification symbols)
*G02F1/1335*(2006.01), *G02B5/30*(2006.01)

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2003-172929 A (Sharp Corp.), 20 June, 2003 (20.06.03), Full text; all drawings (Family: none) | 1,3,6 |
| A | JP 2001-201767 A (International Business Machines Corp.), 27 July, 2001 (27.07.01), Full text; all drawings & US 2001/0028422 A1 | 1,3,6 |
| A | JP 2003-330020 A (Seiko Epson Corp.), 19 November, 2003 (19.11.03), Full text; all drawings & CN 1442736 A & KR 2003/074251 A & TW 2004/00386 A | 1,3,6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>08 June, 2006 (08.06.06) | Date of mailing of the international search report<br>20 June, 2006 (20.06.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/306000

C (Continuation). DOCUMENTS CONSIDERED TO BE RELEVANT

| Category* | Citation of document, with indication, where appropriate, of the relevant passages | Relevant to claim No. |
|---|---|---|
| A | JP 2005-534989 A (Koninklijke Philips Electronics N.V.), 17 November, 2005 (17.11.05), Full text; all drawings & WO 2004/015486 A1 & EP 1529239 A1 & US 2006/0001804 A1 & AU 2003/247047 A1 & KR 2005/033643 A & CN 1672090 A | 1,3,6 |
| A | JP 2001-519547 A (Robert Bosch GmbH.), 23 October, 2001 (23.10.01), Full text; all drawings & WO 1999/018475 A1 & EP 1019781 A1 & DE 19744249 A1 & KR 2001/024349 A | 1,3,6 |
| A | JP 9-185082 A (Sharp Corp.), 15 July, 1997 (15.07.97), Full text; all drawings (Family: none) | 1,3,6 |
| A | JP 8-171013 A (Toppan Printing Co., Ltd.), 02 July, 1996 (02.07.96), Full text; all drawings (Family: none) | 1,3,6 |
| A | JP 7-270782 A (Casio Computer Co., Ltd.), 20 October, 1995 (20.10.95), Full text; all drawings & US 5724112 A | 1,3,6 |
| A | JP 4-75025 A (NEC Corp.), 10 March, 1992 (10.03.92), Full text; all drawings (Family: none) | 1,3,6 |
| A | JP 58-17421 A (Sanyo Electric Co., Ltd., Sanritsu Denki Kabushiki Kaisha), 01 February, 1983 (01.02.83), Full text; all drawings (Family: none) | 1,3,6 |

Form PCT/ISA/210 (continuation of second sheet) (April 2005)

**INTERNATIONAL SEARCH REPORT**

International application No.
PCT/JP2006/306000

**Box No. II Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III Observations where unity of invention is lacking (Continuation of item 3 of first sheet)**

This International Searching Authority found multiple inventions in this international application, as follows:

A: The invention of the independent claim 1 has a technical feature relating to that "the electric conductivity is not greater than 25 mS/cm".
B: The invention of the independent claim 2 has a technical feature relating to that "the sodium ion concentration is not greater than 2500 ppm".
C: The invention of the independent claim 4 has a technical feature relating to that "the voltage holding ratio is not smaller than 50%".
D: The inventions of the independent claims 5, 7 have a technical feature relating to that "relative voltage holding ratio is not smaller than 90%".
(continued to extra sheet)

1. ☐ As all required additional search fees were timely paid by the applicant, this international search report covers all searchable claims.

2. ☐ As all searchable claims could be searched without effort justifying an additional fee, this Authority did not invite payment of any additional fee.

3. ☐ As only some of the required additional search fees were timely paid by the applicant, this international search report covers only those claims for which fees were paid, specifically claims Nos.:

4. ☒ No required additional search fees were timely paid by the applicant. Consequently, this international search report is restricted to the invention first mentioned in the claims; it is covered by claims Nos.: 1, 3, 6

**Remark on Protest** the

☐ The additional search fees were accompanied by the applicant's protest and, where applicable, payment of a protest fee..

☐ The additional search fees were accompanied by the applicant's protest but the applicable protest fee was not paid within the time limit specified in the invitation.

☐ No protest accompanied the payment of additional search fees.

INTERNATIONAL SEARCH REPORT

International application No.
PCT/JP2006/306000

Continuation of Box No.III of continuation of first sheet(2)

The groups of inventions A to D of the claims have different technical features. Accordingly, the inventions of these claims do not share "a special technical feature" and do not satisfy the requirement of unity of invention.

Thus, the claims of the present application are divided into the following four groups of inventions:
· claim 1 and independent claims 3, 6
· claim 2
· claim 4
· claims 5, 7 and indepenedent claim 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 50098370 A
- JP 8511109 A
- JP 2005110535 A
- JP 2005123029 A
- JP 2005094098 A
- JP 2006082689 A


### Non-patent literature cited in the description


- **TSUYOSHI OHYAMA et al.** TN Mode TFT-LCD with In-Cell Polarizer. *SID Digest,* vol. 4, 1106-1109
- Ekisho Binran (Handbook of Liquid Crystal. MARUZEN Co., Ltd, 30 October 2000, 226-239
- **YOUJI HARASAKI.** Kouting Kougaku (Coating Technology. Asakura Publishing Co., Ltd, 20 March 1971, 253-277
- Bunshi Kyoucho Zairyo no Sousei to Ouyo (Creation and Application of Molecular Collaborative Materials. CMC Publishing Co., Ltd, 03 March 1998, 118-149
- Den-atsu Hojiritsu Soukutei Houhou (Measurement of Voltage holding ratio. *Ekisyou Hyouji Paneru oyobi sono Kousei Zairyo no Sokutei Houhou (Measurements on Liquid Crystal Display Panel and its Materials*
- **TATSUO UCHIDA et al.** Furatto Paneru Dyisupurei Daijiten (Comprehensive Dictionary of Flat Panel Display. Kogyo Chosakai Publishing, Inc, 25 December 2001, 45
- **TATSUO UCHIDA et al.** Furatto Paneru Dyisupurei Daijiten (Comprehensive Dictionary of Flat Panel Display. Kogyo Chosakai Publishing, Inc, 25 December 2001, 54-83
- **KENZO KONISHI et al.** Gosei Senryou no Kagaku (Chemistry of Synthetic Dye. Maki Shoten, 15 March 1974, 388-404